# FASCICULE DE BREVET EUROPEEN

(11) **EP 3 153 458 B1**
(45) Date de publication et mention de la délivrance du brevet: **31.01.2018**
(21) Numéro de dépôt: 16306316.7
(22) Date de dépôt: 06.10.2016
(51) Int. Cl.: B67C 3/00

(54) **PROCEDE DE FORMATION D'UN EMBALLAGE A PARTIR D'UN RECIPIENT, COMPRENANT UNE PHASE DE CONTROLE THERMIQUE**
VERFAHREN ZUR HERSTELLUNG EINER VERPACKUNG AUF DER BASIS EINES BEHÄLTERS, DAS EINE THERMISCHE KONTROLLPHASE UMFASST
METHOD FOR FORMING A PACKAGE FROM A CONTAINER, COMPRISING A THERMAL CONTROL PHASE

(30) Priorité: 08.10.2015 FR 1559570
(43) Date de publication de la demande: 12.04.2017
(73) Titulaire: Sidel Participations, 76930 Octeville-sur-Mer (FR)
(72) Inventeur: DERRIEN, Mikaël, 76930 Octeville-sur-mer (FR)
(74) Mandataire: Siloret, Patrick

(56) Documents cités:
- JP-A- H0 542 992
- US-A1- 2012 085 071
- US-B2- 8 671 653

## Description

L'invention a trait au domaine de la production d'emballages à partir de récipients en matière plastique, que l'on remplit d'un contenu (liquides, pâtes) à chaud, c'est-à-dire que le contenu est à une température supérieure à la température de transition vitreuse du matériau dans lequel est fabriqué le récipient. L'invention concerne en particulier un procédé de formation d'un emballage selon le préambule de la revendication 1. Un tel procédé est divulgué dans l'état de la technique par le document de brevet US 8 671 653 B2. Le remplissage à chaud est fréquent pour certains contenus spéciaux, notamment ceux subissant une pasteurisation (jus de fruits ou autres boissons fruitées, lait, condiments) ou une infusion (thé, café).

La température de ce type de contenu est couramment supérieure à 90°C, tandis que les récipients concernés sont ordinairement fabriqués en PET (polytéréphtalate d'éthylène), dont la température de transition vitreuse est de l'ordre de 80°C.

Le remplissage à chaud pose un problème de résistance mécanique du récipient, en raison de son ramollissement dû à son exposition à la chaleur de son contenu.

Une technique connue permettant d'augmenter la résistance mécanique du récipient est la thermofixation, qui consiste, à la fin du formage du récipient, à le maintenir temporairement à une température élevée (par exemple en le maintenant au contact de la paroi chauffée de son moule) de façon à accroître par voie thermique la cristallinité de la matière.

Cette technique permet, certes, d'augmenter les performances mécaniques du récipient lors du remplissage en lui conférant une bonne tenue mécanique, mais peut néanmoins se révéler insuffisante. En effet, même thermofixé, le récipient, une fois bouché, peut ne pas résister aux contraintes induites par la contraction du contenu accompagnant son refroidissement. Il en résulte fréquemment des déformations incontrôlées qui nuisent à la fois à l'esthétique du récipient et à sa tenue mécanique (notamment lorsqu'il doit être palettisé).

Pour contrôler les déformations induites par les contraintes accompagnant la contraction du contenu refroidissant, une première solution consiste à munir le récipient de panneaux déformables, cf. par exemple le brevet américain US 5 704 503 (Continental PET). Les panneaux se déforment au gré de la pression régnant dans le récipient. Ils se gonflent lors du remplissage, puis se creusent lorsque le contenu refroidit. Le principal inconvénient de cette solution est la limite que la présence des panneaux impose à la liberté de forme du récipient, au détriment de son esthétique.

Une deuxième solution consiste à munir le récipient d'un fond à membrane retournable, cf. par exemple le brevet américain US 8 671 653 (Graham Packaging), dans lequel la membrane est retournée au moyen d'un poussoir mécanique, de façon à réduire le volume interne du récipient pour en remettre le contenu sous pression et ainsi gagner en rigidité. Cette deuxième solution est meilleure que la première en termes de rigidité structurelle du récipient et de liberté de forme pour celui-ci, mais elle impose des contraintes de fabrication.

En effet, il arrive que la membrane soit instable dans sa position retournée, et retrouve sa position initiale sous la pression régnant dans le récipient. Une hypothèse valable est que le récipient n'a pas suffisamment refroidi, de sorte que la membrane retournée ne peut pas atteindre la position souhaitée qui garantit son verrouillage stable en position.

Laisser longtemps refroidir librement tous les récipients grèverait la productivité (rappelons que les cadences ordinaires sont aujourd'hui de l'ordre de 50 000 récipients par heure).

Une solution alternative serait de soumettre tous les récipients à un refroidissement forcé (par exemple par brumisation) mais cette solution est consommatrice d'énergie.

Un premier objectif est d'améliorer la fiabilité de la production des emballages à partir de récipients remplis à chaud.

Un deuxième objectif est de mieux maîtriser l'opération de retournement d'une zone déformable prévue sur le récipient.

Un troisième objectif est de limiter la consommation d'énergie lors de la production des emballages.

A cet effet, il est proposé un procédé de formation d'un emballage à partir d'un récipient ayant un corps, un col et un fond, le récipient présentant une zone déformable, à l'aide d'un poussoir mécanique mobile entre une position rétractée et une position déployée, d'une configuration sortie dans laquelle ladite zone fait saillie vers l'extérieur du récipient, à une configuration rentrée dans laquelle ladite zone fait saillie vers l'intérieur du récipient, ce procédé comprenant les opérations suivantes :
- la zone déformable étant dans sa position sortie, remplir le récipient au moyen d'un produit se trouvant à une température supérieure à la température de transition vitreuse de la matière du récipient ;
- fermer de manière étanche le récipient ainsi rempli, au moyen d'un bouchon monté sur le col ;
- mesurer la température du récipient bouché ;
- comparer la température ainsi mesurée à une valeur seuil prédéterminée ;
- si la température mesurée est inférieure ou égale à la valeur seuil, déplacer le poussoir, à partir de sa position rétractée, vers sa position déployée pour faire passer la zone déformable de sa configuration sortie à sa configuration rentrée ;
- si la température mesurée est supérieure à la valeur seuil, maintenir au moins temporairement le poussoir dans sa position rétractée.

Diverses caractéristiques supplémentaires peuvent être prévues, seules ou en combinaison :
- si la température mesurée est supérieure à la valeur seuil, il est prévu une opération consistant à générer un signal d'alerte ;
- si la température mesurée est supérieure à la valeur seuil, il est prévu une opération consistant à maintenir le poussoir dans sa position rétractée pendant une temporisation prédéterminée, puis une opération consistant à déplacer le poussoir vers sa position déployée.
- si la température mesurée est supérieure à la valeur seuil, il est prévu une opération de refroidissement forcé du récipient, ou une opération de déviation du récipient vers un stock tampon ;
- il est prévu une opération de comparaison de la température mesurée à une valeur cible inférieure à la valeur seuil ;
- si la température mesurée est comprise entre la valeur seuil et la valeur cible, il est prévu une opération d'augmentation de l'effort appliqué par le poussoir à la zone déformable et/ou une opération d'augmentation de la vitesse de déplacement du poussoir ;
- si la température mesurée est inférieure à la valeur cible, il est prévu une opération de diminution de l'effort appliqué par le poussoir à la zone déformable et/ou une opération de diminution de la vitesse de déplacement du poussoir ;
- la température valeur cible est de 30°C environ.
- la valeur seuil est de 40°C environ ;
- la zone déformable est une membrane reliant une assise du fond et un pion central du fond ;
- la température est mesurée au moyen d'un capteur constitué par une caméra thermique ou un pyromètre ;
- la température est mesurée sur le corps du récipient.

D'autres objets et avantages de l'invention apparaîtront à la lumière de la description d'un mode de réalisation, faite ci-après en référence aux dessins annexés dans lesquels :
- la figure 1 est une vue en coupe montrant un récipient tout juste formé, ce récipient étant muni d'un fond dans lequel la zone déformable est une membrane inversable ;
- la figure 2 est une vue en coupe du récipient de la figure 1, en cours de remplissage ;
- la figure 3 est une vue en coupe du récipient de la figure 2, bouché et installé sur un poste équipé d'un poussoir mécanique agencé pour inverser la membrane, en regard duquel est montée une caméra thermique ;
- la figure 4 est une première image thermique d'un récipient, accompagnée, pour la lecture de l'image, d'une palette de couleurs correspondant à différentes gammes de températures ;
- la figure 5 est une deuxième image thermique d'un récipient ;

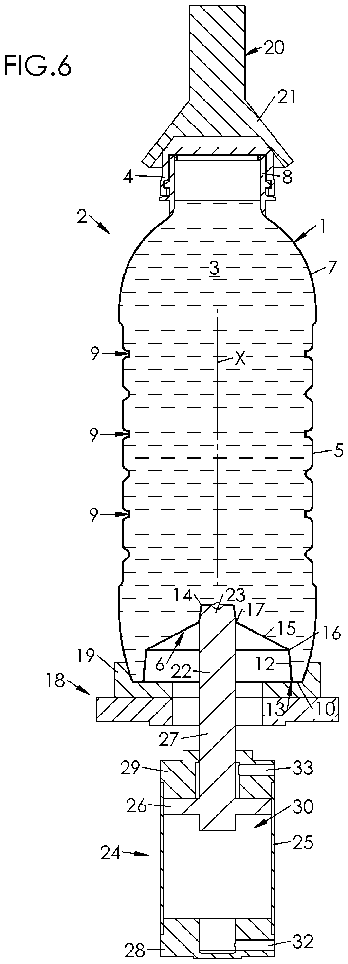

- la figure 6 est une vue en coupe illustrant le retournement de la membrane.

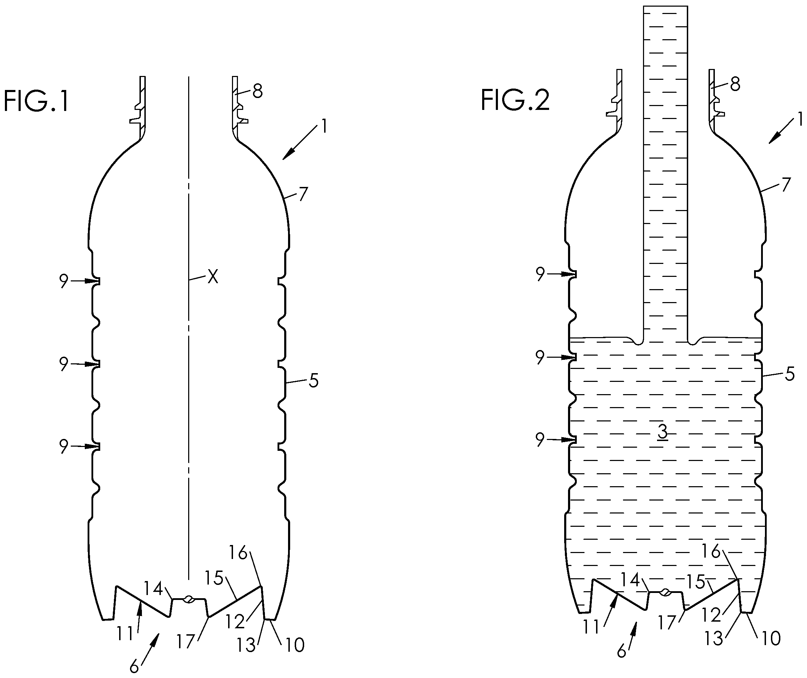

Sur la figure 1 est représenté un récipient **1** en matière plastique (par exemple en PET) à partir duquel est formé un emballage **2,** lequel comprend, outre ce récipient **1,** un contenu **3** versé dans celui-ci, un bouchon **4** qui vient obturer de manière étanche le récipient **1** et, le cas échéant, une étiquette rapportée sur laquelle sont imprimées diverses informations à destination du consommateur.

Le récipient **1** comprend un corps **5** de forme sensiblement cylindrique qui s'étend suivant un axe **X** principal, un fond **6** qui ferme le corps **5** à une extrémité inférieure de celui-ci, une épaule **7** qui forme un rétrécissement à partir d'une extrémité supérieure du corps **5** opposée au fond **6,** et un col **8** ouvert qui prolonge l'épaule **7** et par lequel le récipient **1** est rempli puis vidé.

Selon un mode de réalisation illustré sur les figures, le corps **5** comprend des nervures **9** annulaires de rigidification qui accroissent sa rigidité mécanique, notamment pour éviter son ovalisation, c'est-à-dire son aplatissement radial (perpendiculairement à l'axe **X**), consécutif à une dépression dans le récipient **1** accompagnant par exemple le refroidissement du contenu **3.**

Le fond **6** du récipient **1** présente une assise **10** annulaire périphérique par laquelle le récipient **1** est destiné à reposer sur une surface plane telle qu'une table, et une voûte **11** qui prolonge l'assise **10** vers l'axe **X** et s'étend en saillie vers l'intérieur de celui-ci.

La voûte **11** comprend une paroi **12** latérale tronconique qui s'étend en saillie à partir d'un bord **13** interne de l'assise **10** vers l'intérieur du récipient **1,** un pion **14** central qui fait saillie vers l'intérieur du récipient **1,** et une zone déformable, constituée par une membrane **15** inversable, tronconique, qui s'étend en dévers depuis un bord **16** supérieur de la paroi **12** latérale jusqu'à un bord **17** périphérique du pion **14** central.

Le récipient **1** est formé typiquement par soufflage ou étirage soufflage à partir d'une préforme préalablement chauffée, au sein d'un moule à l'empreinte du récipient **1** (hormis le col **8,** qui possède sa forme finale sur la préforme). Le récipient **1** est formé avec sa membrane **15** dans une configuration sortie dans laquelle la membrane **15** fait saillie vers l'extérieur du récipient **1** (figure 1).

A la fin de son formage, le récipient **1** subit avantageusement une thermofixation qui consiste à le maintenir en contact avec le moule dont la température est régulée à une valeur relativement élevée (supérieure à 120°C environ). Cette thermofixation augmente la cristallinité de la matière par voie thermique, ce qui accroît la résistance mécanique du récipient **1,** au bénéfice de sa tenue lorsque le contenu **3** est chaud.

Après avoir été formé, le récipient **1** subit une opération de remplissage consistant à y déverser par le col **8** un produit (notamment un liquide) qui formera le contenu **3,** comme illustré sur la figure 2. Le produit peut être à une température supérieure à la température de transition vitreuse de la matière du récipient **1.** Selon un exemple de réalisation, dans lequel le récipient **1** est réalisé en PET (dont la température de transition vitreuse est de l'ordre de 80°C), le produit versé dans le récipient **1** est à une température supérieure ou égale à 90°C environ.

Grâce à la thermofixation qu'il a subie, le récipient **1** peut, sans de déformer notablement, résister mécaniquement aux contraintes induites par le choc thermique subi lors du remplissage.

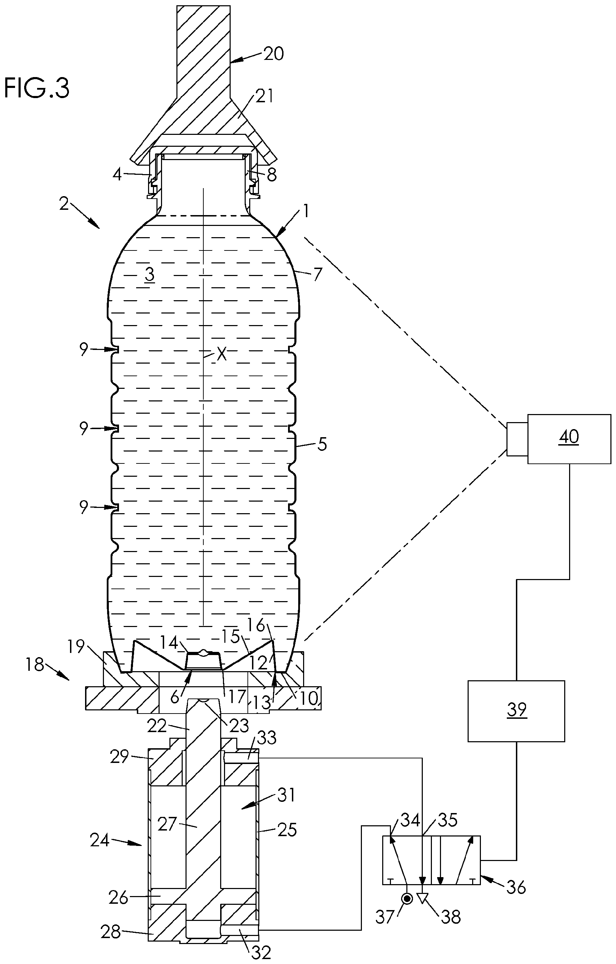

Après avoir été rempli, le récipient **1** est bouché au moyen du bouchon **4** qui est rapporté et monté sur le col **8** (par encliquetage et/ou par vissage), comme illustré sur la figure 3. Le récipient **1** est alors obturé de manière étanche.

Après avoir été bouché, le récipient **1** est transféré vers un poste **18** d'inversion qui comprend un support **19** annulaire dans lequel vient s'emboîter le récipient **1.** Plus précisément, le support **19** forme une contre-empreinte au moins de l'assise **10** et de l'extrémité inférieure du corps **5,** ce qui bloque le récipient **1** transversalement (c'est-à-dire perpendiculairement à l'axe **X** principal).

Le poste **18** d'inversion comprend en outre une poupée **20** qui bloque le récipient **1** axialement (c'est-à-dire parallèlement à l'axe **X** principal). Dans l'exemple illustré sur la figure 3, la poupée **20** comprend une tête **21** conique qui vient s'appuyer contre le bouchon **4.**

Le récipient **1** se trouve ainsi maintenu rigidement entre le support **19** et la poupée **20.**

Le poste **18** d'inversion comprend également un poussoir **22** mécanique mobile par rapport au support **19,** et apte à venir au contact du fond **6** au travers de celui-ci pour inverser la membrane **15** de sa position sortie à sa position rentrée, tandis que le récipient **1** est maintenu entre le support **19** et la poupée **20** sans possibilité de mouvement axial.

Plus précisément, le poussoir **22** est déplaçable en translation suivant l'axe **X** entre une position rétractée dans laquelle il s'étend à distance du fond **6** du récipient **1,** et une position déployée dans laquelle il fait saillie du support **19** vers l'intérieur du récipient **1.** Dans l'exemple illustré, le poussoir **22** présente une extrémité **23** libre de forme complémentaire de celle du pion **14,** mais cette extrémité **23** pourrait être de forme plus simple, par exemple cylindrique.

Le poste **18** d'inversion comprend encore un actionneur **24** propre à déplacer le poussoir **22,** d'une part de sa position rétractée à sa position déployée pour réaliser l'inversion (c'est-à-dire le retournement) de la membrane **15,** et d'autre part, inversement, de sa position déployée à sa position rétractée où il est ainsi prêt pour le cycle suivant.

Selon un mode de réalisation, l'actionneur **24** est un vérin (électrique ou, comme dans l'exemple illustré, pneumatique ou hydraulique).

L'actionneur **24** comprend un corps **25** cylindrique, un piston **26** et une tige **27** solidaire du piston **26.** Le poussoir **22** est fixé sur la tige **27** ou, comme dans l'exemple illustré, formé de manière unitaire avec celle-ci.

L'actionneur **24** comprend deux parois qui ferment le corps **25 :** une paroi **28** d'extrémité arrière, et une paroi **29** d'extrémité avant opposée, cette dernière étant percée d'un trou au travers duquel s'étend la tige **27.** Le piston **26** définit, dans le corps **25,** une chambre **30** arrière, entre le piston **26** et la paroi **28** d'extrémité arrière, et une chambre **31** avant autour de la tige **27,** entre le piston **26** et la paroi **29** d'extrémité avant.

La chambre **30** arrière et la chambre **31** avant sont en communication fluidique, via une entrée **32** arrière pratiquée dans la paroi **28** d'extrémité arrière et via une entrée **33** avant pratiquée dans la paroi **29** d'extrémité avant, respectivement avec une première sortie **34** et une deuxième sortie **35** d'un distributeur **36** fluidique raccordé par ailleurs à une source **37** de fluide (par exemple de l'air ou de l'huile) sous pression et à une évacuation **38.** Comme on le voit sur la figure 3, le distributeur **36** est piloté par une unité **39** de contrôle informatisée, tel qu'un API (automate programmable industriel).

La chambre **30** arrière et la chambre **31** avant sont mises alternativement en communication fluidique avec la source **37** de fluide et l'évacuation **38** via le distributeur **36,** de façon à déplacer le poussoir **22** (par le piston **26**) successivement de sa position rétractée, dans laquelle le piston **26** est au voisinage de la paroi **28** d'extrémité arrière, à sa position déployée, dans laquelle le piston **26** est au voisinage de la paroi **29** d'extrémité avant.

Il a toutefois été déterminé que, si l'inversion de la membrane **15** est réalisée alors que le récipient **1** est trop chaud, sa résistance mécanique ne sera pas suffisante pour que la membrane **15** conserve de manière certaine sa position rentrée.

C'est pourquoi il est prévu, entre l'opération de bouchage et l'opération d'inversion de la membrane **15,** une phase de contrôle de la température du récipient **1,** qui comprend :
- une opération de mesure de la température du récipient **1** bouché,
- une opération de comparaison de la température ainsi mesurée à une valeur seuil Ts prédéterminée, mémorisée dans l'unité **39** de contrôle.

La mesure de température est réalisée au moyen d'un capteur **40,** de préférence sous forme d'une caméra thermique qui permet de réaliser un profil thermique complet sur l'ensemble du corps **5** du récipient **1.** La caméra **40** est par exemple du modèle A315 commercialisé par la société FLIR, qui permet de réaliser des images dans la gamme thermique de -20°C à 120°C avec une résolution de 320x240 pixels. Comme illustré sur la figure 3, la caméra **40** est reliée à l'unité **39** de contrôle à laquelle elle communique ses mesures. En variante, le capteur **40** est un pyromètre qui effectue une mesure ponctuelle de température. Un pyromètre peut convenir si l'on constate que la température du récipient **1** est homogène et peut être extrapolée à partir d'une mesure de température en un point unique du récipient **1.**

Selon un mode de réalisation, la caméra **40** est commune à plusieurs (et par exemple à tous les) postes **18** d'inversion, en étant positionnée de manière fixe en regard d'une roue sur laquelle sont montés les postes **18.** Selon un autre mode de réalisation, chaque poste **18** est équipé de sa propre caméra **40** thermique.

Comme illustré sur la figure 3, la caméra **40** est de préférence positionnée de manière que son champ de vision englobe le corps **5** du récipient **1,** pour pouvoir en dresser une thermographie complète.

La mesure de température ainsi réalisée est communiquée par la caméra **40** à l'unité **39** de contrôle. Celle-ci compare la température mémorisée à la valeur seuil Ts, et :
- si la température mesurée est inférieure ou égale à la valeur seuil Ts, l'unité **39** de contrôle commande sans délai le déplacement du poussoir **22,** à partir de sa position rétractée, vers sa position déployée pour inverser la membrane **15** en la faisant passer de sa configuration sortie à sa configuration rentrée ;
- si la température mesurée est supérieure à la valeur seuil Ts, l'unité **39** de contrôle commande le maintien au moins temporaire du poussoir **22** dans sa position rétractée.

Dans le premier cas, la pression exercée dans le récipient **1** par le contenu **3** sur la membrane **15** est décrétée suffisamment faible pour permettre le déplacement du poussoir **22** (et donc le retournement de la membrane **15**), tandis que la rigidité mécanique du récipient **1** (et en particulier du fond **6**) est décrétée suffisante pour que la membrane **15** puisse se verrouiller dans sa configuration rentrée (après retournement) malgré la pression exercée par le contenu **3.**

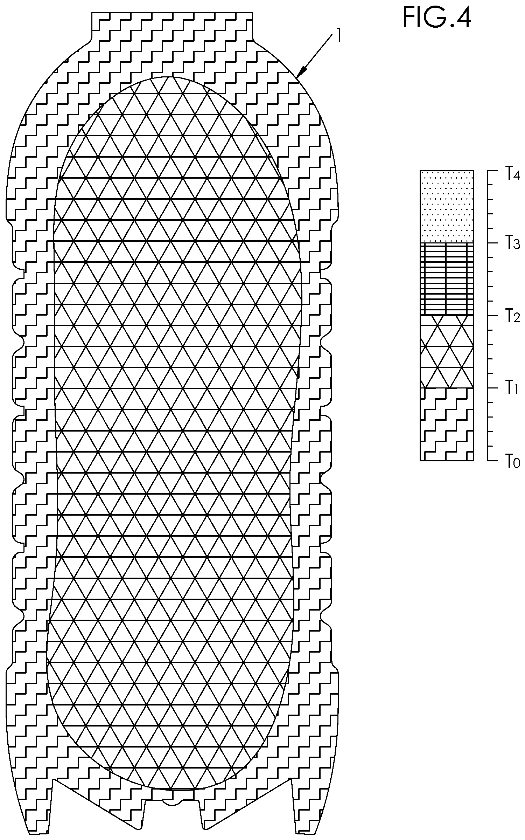

On a illustré ce premier cas sur la figure 4, qui montre une thermographie d'un récipient **1** réalisée après le bouchage, telle que mémorisée dans l'unité **39** de contrôle qui intègre un programme d'imagerie. Une légende est, à des fins purement illustratives, représentée sur la figure 4 pour faciliter la compréhension du mode opératoire appliqué par l'unité **39** de contrôle. Cette légende comprend quatre gammes de températures [Tᵢ ; Tᵢ₊₁] (où i est un entier positif ou nul, les températures étant croissantes suivant la valeur croissante de l'indice i) représentées par des motifs différents. Ainsi :
[T₀ ; T₁] est représenté par un motif en zigzag ;
[T₁ ; T₂] par un motif à triangulaire ;
[T₂ ; T₃] par un motif à quadrillage rectangulaire ;
[T₃ ; T₄] par un motif à points.

Les valeurs des températures Tᵢ sont par exemple les suivantes :
T₀ = 30°C ;
T₁ = 35°C ;
T₂ = 40°C ;
T₃ = 45°C ;
T₄ = 50°C.

On constate, d'après la thermographie illustrée sur la figure 4, que le récipient **1** correspondant présente deux zones de température : une zone externe dont la température est comprise entre T₀ et T₁ (soit entre 30°C et 35°C dans l'exemple ci-dessus) et une zone centrale dont la température est comprise entre T₁ et T₂ (soit entre 35°C et 40°C dans l'exemple ci-dessus). A supposer par conséquent que l'on ait affecté à Ts la valeur 40°C, on voit que la température du récipient **1** dont la thermographie est illustrée sur la figure 4 est inférieure à Ts.

Par conséquent, il est décrété que la membrane **15** de ce récipient **1** peut être retournée. Dans ce cas, immédiatement après que l'unité **39** de contrôle a fait ce constat, elle commande le déplacement (via le distributeur **36**) du poussoir **22** de sa position rétractée à sa position déployée pour inverser la membrane **15** vers sa configuration rentrée, mettant ainsi le récipient **1** sous pression.

Dans le deuxième cas en revanche, la pression résiduelle à l'intérieur de l'emballage **2** est soit trop importante pour permettre le déplacement du poussoir **22** (et donc le retournement de la membrane **15**), soit, à supposer que le déplacement du poussoir **22** soit possible, trop important pour permettre à la membrane **15** de se verrouiller dans sa configuration rentrée (après retournement). En d'autres termes, la membrane **15** risque de se retourner inopinément, sous la pression régnant dans le récipient **1,** de sa configuration rentrée (après inversion mécanique) à sa configuration sortie.

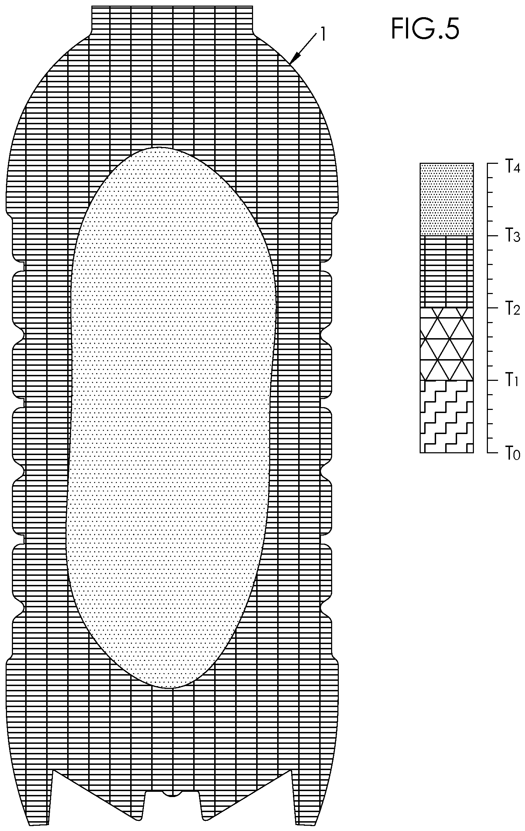

On a illustré ce deuxième cas sur la figure 5, qui montre une thermographie d'un récipient **1** réalisée après le bouchage, telle que mémorisée dans l'unité **39** de contrôle dans les conditions exposées ci-dessus pour la thermographie illustrée sur la figure 4.

On constate, d'après la thermographie de la figure 5, que le récipient **1** correspondant présente deux zones de température : une zone externe dont la température est comprise entre T₂ et T₃ (soit entre 40°C et 45°C dans l'exemple ci-dessus) et une zone centrale dont la température est comprise entre T₃ et T₄ (soit entre 45°C et 50°C dans l'exemple ci-dessus). A supposer que l'on ait affecté à Ts la valeur 40°C, on voit que la température du récipient **1** dont la thermographie est illustrée sur la figure **5** est supérieure à Ts.

Par conséquent, on ne doit pas tenter de retourner la membrane **15** de ce récipient **1,** du moins pas avant que la température de celui-ci ne soit retombée sous Ts (ou ait tout au moins atteint Ts). A défaut, à supposer qu'elle puisse être retournée, la membrane **15** pourrait ne pas tenir la configuration rentrée et se retourner d'elle-même vers sa position sortie sous l'effet de la pression régnant dans le récipient **1,** qui surpasserait la résistance mécanique opposée par la membrane **15.**

C'est pourquoi, dans ce deuxième cas, l'unité **39** de contrôle commande le maintien au moins temporaire du poussoir **22** dans sa position rétractée. Un signal d'alerte peut être généré, par exemple pour avertir un opérateur qu'un récipient **1** est non conforme en température, de façon à l'inciter par exemple à vérifier la température du contenu **3** lors de l'opération de remplissage.

Selon un premier mode de réalisation, le poussoir **22** est maintenu dans sa position rétractée pendant une temporisation déterminée, avant d'être déplacé, sur commande de l'unité **39** de contrôle (via le distributeur **36**) vers sa position déployée pour inverser la membrane **15.**

A cet effet, l'unité **39** de contrôle peut intégrer un modèle prédictif d'évolution de la température du récipient en fonction du temps, qui lui permet de calculer la temporisation précitée. Cette temporisation est par exemple égale à l'intervalle de temps séparant, dans le modèle prédictif, les instants auxquels le récipient présente respectivement la température mesurée et la température Ts.

L'unité **39** de contrôle peut être programmée pour commander la déviation du récipient **1** vers une zone tampon si la température mesurée est supérieure à la valeur seuil Ts et si la temporisation calculée est supérieure à un seuil temporel prédéterminé, correspondant par exemple au temps de stationnement du récipient **1** rempli sur le support **19.** Dans la zone tampon, le récipient **1** peut être laissé à refroidir pendant une durée prédéterminée. Une fois la température du récipient **1** inférieure ou égale à la valeur seuil Ts (ce qui peut être mesuré ou calculé par extrapolation à partir de la température initiale du récipient **1**), le récipient **1** est redirigé vers la ligne de production pour permettre le retournement de sa membrane **15.** Le récipient **1** peut également, si la température mesurée est supérieure à la valeur seuil Ts, être soumis à une opération de refroidissement forcé, par exemple par projection (typiquement par pulvérisation) d'un liquide froid sur le corps **5.** Cette opération peut être accomplie le long de la ligne de production, ou sur une ligne séparée vers laquelle est dévié le récipient dès lors que sa température est supérieure à la valeur seuil Ts.

Une fois achevé le refroidissement (naturel ou forcé) du récipient **1,** celui-ci peut être soumis à l'opération de retournement de sa membrane **15.**

Il a été déterminé que la membrane **15** peut être retournée avec des chances maximales de verrouillage en position rentrée lorsque la température mesurée du récipient **1** est égale ou sensiblement égale à une température dite cible, prédéterminée, ci-après notée Tc, identique pour tous les récipients de même modèle remplis dans les mêmes conditions. La température cible, inférieure à la température seuil Ts, est typiquement de 30°C environ.

Selon un mode particulier de réalisation, outre la comparaison à la température seuil Ts, la température mesurée est en outre comparée à la température cible Tc, mémorisée dans l'unité **39** de contrôle. Si la température mesurée est égale (ou sensiblement égale, à quelques degrés près, typiquement à ± 2°C près) à la température cible Tc, les conditions opératoires du retournement de la membrane **15** sont inchangées.

Nous avons vu que le retournement de la membrane **15** peut être effectué tant que la température mesurée est inférieure ou égale à la température seuil Ts.

En revanche, la comparaison avec la température cible Tc détermine les conditions opératoires du retournement, l'unité **39** de contrôle agissant sur l'effort appliqué à la membrane **15** par le poussoir **22** et/ou sur la vitesse de déplacement de celui-ci.

Ainsi, si la température mesurée est comprise entre la valeur seuil Ts et la valeur cible Tc, l'unité **39** de contrôle est programmée pour augmenter l'effort appliqué par le poussoir **22** à la membrane **15** et/ou augmenter la vitesse de déplacement du poussoir **22.** En effet, cette condition de température signifie que la pression dans le récipient demeure élevée, et que maintenir les conditions d'effort et/ou de vitesse appliqués par le poussoir **22** à la membrane **15** prévues pour la température cible Tc pourraient se révéler insuffisantes pour assurer son retournement et/ou son verrouillage en position rentrée.

Dans ce premier cas, l'unité **39** de contrôle peut en outre être programmée pour favoriser une diminution de la température du récipient **1** pour la faire tendre vers la température cible. A cet effet, et à supposer que les emballages **2** fassent l'objet d'un refroidissement forcé systématique après leur remplissage et leur bouchage (et avant le retournement de leur membrane **15**), l'unité **39** de contrôle peut commander une augmentation de la température de régulation appliquée aux emballages **2** ainsi refroidis, jusqu'à ce que la température mesurée soit égale ou sensiblement égale à la valeur cible Tc, ce qui permet d'atteindre une productivité optimale.

A contrario, si la température mesurée est inférieure à la valeur cible Tc, l'unité **39** de contrôle est programmée pour diminuer l'effort appliqué par le poussoir **22** à la membrane **15** et/ou diminuer la vitesse de déplacement du poussoir **22.** En effet, cette condition de température signifie que la pression régnant dans le récipient **1** a chuté, et qu'il n'est pas nécessaire d'appliquer à la membrane **15** un effort trop important, ni de la déplacer trop rapidement, pour parvenir à la retourner, et ce au bénéfice des économies d'énergie. En outre, la limitation de l'effort appliqué à la membrane lui épargne des chocs mécaniques importants (et inutiles).

Dans ce deuxième cas, l'unité **39** de contrôle peut être programmée pour favoriser une augmentation de la température du récipient **1** pour la faire tendre vers la température cible. A cet effet, et à supposer que les emballages **2** fassent l'objet d'un refroidissement forcé systématique après leur remplissage et leur bouchage (et avant le retournement de leur membrane **15**), l'unité **39** de contrôle peut commander une modification de la température de régulation appliquée aux emballages **2** ainsi refroidis, jusqu'à ce que la température mesurée soit égale ou sensiblement égale à la valeur cible Tc, ce qui permet d'atteindre une productivité optimale.

On notera que, puisque la température mesurée n'est pas nécessairement homogène sur l'ensemble du corps **5** du récipient **1** (ainsi que cela ressort des exemples illustrés sur les figures 4 et 5), l'unité **39** de contrôle peut, pour effectuer ses comparaisons et ses calculs, ne retenir que la borne supérieure des températures mesurées, ou encore effectuer une moyenne de celles-ci, éventuellement pondérée par les aires des surfaces correspondantes détectées sur le corps **5** du récipient **1.**

De même, on peut estimer qu'une thermographie instantanée (sous forme d'une unique mesure de température) est suffisante, en supposant que la répartition des températures est symétrique de révolution autour de l'axe **X**. Cette hypothèse peut notamment être retenue si le récipient **1** est lui-même symétrique de révolution autour de l'axe **X**.

Mais on peut inversement estimer qu'une thermographie complète (sous forme d'une pluralité de mesures de températures réalisées simultanément ou successivement autour du récipient **1**) du récipient **1** est nécessaire, en admettant que la répartition des températures n'est pas symétrique de révolution autour de l'axe **X**. Cette hypothèse peut notamment être retenue si le récipient **1** présente lui-même une asymétrie de révolution autour de l'axe **X** (par exemple si le récipient **1** présente en section transversale un contour rectangulaire, carré, ovale). Dans ce cas, la thermographie peut être réalisée au moyen de plusieurs capteurs (notamment caméras) réparties autour du récipient **1,** ou au moyen d'un capteur (notamment caméra) unique qui réalise plusieurs mesures de successives de température (plusieurs prises de vues dans le cas d'une caméra) par révolution (du récipient **1** ou du capteur **40**) autour de l'axe **X**.

Dans ce cas, les opérations de comparaison peuvent être répétées pour l'ensemble des mesures, ou une moyenne peut être effectuée pour obtenir un profil thermique moyen.

On notera que, dans ce qui précède, la température mesurée est celle du corps **5** du récipient **1,** alors que l'opération de retournement concerne le fond **6** (et plus précisément la membrane **15**). On peut en effet considérer que la température du fond **6** (et en particulier de la membrane **15**) n'est pas sensiblement différente de celle du corps **5** en raison de la relative isotropie du contenu **3,** et que celui-ci transfère au fond **6** la même quantité de chaleur (par unité de surface) qu'au corps **5.**

Mais on peut supposer que le corps **5** et le fond **6** n'ont pas la même température et/ou pas le même comportement thermique. Dans ce cas, la caméra **40** peut être montée en regard du fond **6** pour en réaliser une thermographie directe, au lieu d'être montée en regard du corps **5.** Les deux positionnements peuvent également être combinés.

Le procédé qui vient d'être décrit présente les avantages suivants.

Premièrement, le fait de mesurer la température du récipient **1** (sur le corps **5** et/ou sur le fond **6**) avant de commander le déplacement du poussoir **22** (et donc l'inversion de la membrane **15**) permet de vérifier si l'inversion peut être réalisée de manière fiable (c'est-à-dire sans risque que la membrane **15** ne retrouve sa position initiale sous la pression régnant dans le récipient **1**).

Deuxièmement, le fait de réaliser le retournement de la membrane **15** dans des conditions thermiques optimales permet de mieux maîtriser cette opération, notamment en diminuant les risques de déformation par le poussoir **22** (si la température du récipient **1** est trop élevée).

Dans la description qui précède, l'opération d'inversion concerne le fond **6** (et plus précisément la membrane **15**). Toutefois, il pourrait s'agir de retourner une zone quelconque sur le récipient **1** (notamment sur le corps **5**), cette zone étant déformable entre une position sortie dans laquelle la zone fait saillie vers l'extérieur du récipient **1,** et une position rentrée dans laquelle la zone fait saillie vers l'intérieur du récipient **1.** Cette zone déformable pourrait être, par exemple, un renflement formé sur le corps **5** du récipient **1,** qui outre qu'il mettrait sous pression le récipient **1** par son inversion, pourrait former par exemple une poignée facilitant la prise en main du récipient **1.**

## Revendications

1. Procédé de formation d'un emballage (**2**) à partir d'un récipient (**1**) ayant un corps (**5**), un col (**8**) et un fond (**6**), le récipient (**1**) présentant une zone (**15**) déformable, à l'aide d'un poussoir (**22**) mécanique mobile entre une position rétractée et une position déployée, d'une configuration sortie dans laquelle ladite zone (**15**) fait saillie vers l'extérieur du récipient (**1**), à une configuration rentrée dans laquelle ladite zone (**15**) fait saillie vers l'intérieur du récipient (**1**), ce procédé comprenant les opérations suivantes :
- la zone (**15**) déformable étant dans sa position sortie, remplir le récipient (**1**) au moyen d'un produit se trouvant à une température supérieure à la température de transition vitreuse de la matière du récipient (**1**) ;
- fermer de manière étanche le récipient (**1**) ainsi rempli, au moyen d'un bouchon (**4**) monté sur le col (**8**) ;
ce procédé étant **caractérisé en ce qu'**il comprend les opérations consistant à :
- mesurer la température du récipient (**1**) bouché ;
- comparer la température ainsi mesurée à une valeur seuil prédéterminée ;
- si la température mesurée est inférieure ou égale à la valeur seuil, déplacer le poussoir (**22**), à partir de sa position rétractée, vers sa position déployée pour faire passer la zone (**15**) déformable de sa configuration sortie à sa configuration rentrée ;
- si la température mesurée est supérieure à la valeur seuil, maintenir au moins temporairement le poussoir (**22**) dans sa position rétractée.

2. Procédé selon la revendication 1, **caractérisé en ce qu'**il comprend, si la température mesurée est supérieure à la valeur seuil, une opération consistant à générer un signal d'alerte.

3. Procédé selon la revendication 1 ou la revendication 2, **caractérisé en ce qu'**il comprend, si la température mesurée est supérieure à la valeur seuil, une opération consistant à maintenir le poussoir (**22**) dans sa position rétractée pendant une temporisation prédéterminée, puis une opération consistant à déplacer le poussoir (**22**) vers sa position déployée.

4. Procédé selon l'une des revendications précédentes, **caractérisé en ce qu'**il comprend, si la température mesurée est supérieure à la valeur seuil, une opération de refroidissement forcé du récipient (**1**).

5. Procédé selon l'une des revendications 1 à 3, **caractérisé en ce qu'**il comprend, si la température mesurée est supérieure à la valeur seuil, une opération de déviation du récipient vers un stock tampon.

6. Procédé selon l'une des revendications précédentes, **caractérisé en ce qu'**il comprend une opération de comparaison de la température mesurée à une valeur cible inférieure à la valeur seuil.

7. Procédé selon la revendication 6, **caractérisé en ce qu'**il comprend, si la température mesurée est comprise entre la valeur seuil et la valeur cible, une opération d'augmentation de l'effort appliqué par le poussoir (**22**) à la zone (**15**) déformable et/ou une opération d'augmentation de la vitesse de déplacement du poussoir (**22**).

8. Procédé selon la revendication 6, **caractérisé en ce qu'**il comprend, si la température mesurée est inférieure à la valeur cible, une opération de diminution de l'effort appliqué par le poussoir (**22**) à la zone (**15**) déformable et/ou une opération de diminution de la vitesse de déplacement du poussoir (**22**).

9. Procédé selon l'une des revendications 6 à 8, **caractérisé en ce que** la température valeur cible est de 30°C environ.

10. Procédé selon l'une des revendications précédentes, **caractérisé en ce que** la valeur seuil est de 40°C environ.

11. Procédé selon l'une des revendications précédentes, **caractérisé en ce que** la zone (**15**) déformable est une membrane reliant une assise (**10**) du fond (**6**) et un pion (**14**) central du fond (**6**).

12. Procédé selon l'une des revendications précédentes, **caractérisé en ce que** la température est mesurée au moyen d'un capteur (**40**) constitué par une caméra thermique ou un pyromètre.

13. Procédé selon la revendication 12, **caractérisé en ce que** la température est mesurée sur le corps (**5**) du récipient (**1**).

## Patentansprüche

1. Verfahren zur Herstellung einer Verpackung (2) aus einem Behälter (1) mit einem Körper (5), einem Hals (8) und einem Boden (6), wobei der Behälter (1) eine mit Hilfe eines mechanischen Schiebers (22) verformbare Zone (15) aufweist, der zwischen einer eingezogenen Position und einer ausgefahrenen Position, von einer ausgezogenen Ausführung, in der die Zone (15) aus dem Behälter (1) herausragt, in eine eingezogene Ausführung, in der die Zone (15) in das Innere des Behälters (1) hineinragt, beweglich ist, wobei dieses Verfahren die folgenden Schritte umfasst:
- wenn die verformbare Zone (15) in ihrer ausgezogenen Position ist, Füllen des Behälters (1) mit einem Produkt, das eine höhere Temperatur als die Glasübergangstemperatur des Materials des Behälters (1) aufweist;
- dichtes Verschließen des so gefüllten Behälters (1) mit einem auf dem Hals (8) montierten Stöpsel (4) ;
wobei dieses Verfahren **dadurch gekennzeichnet ist, dass** es die folgenden Vorgänge umfasst, darin bestehend:
- die Temperatur des verschlossenen Behälters (1) zu messen;
- die so gemessene Temperatur mit einem vorbestimmten Schwellenwert zu vergleichen;
- wenn die gemessene Temperatur niedriger oder gleich dem Schwellenwert ist, den Schieber (22) von seiner eingezogenen Position in seine ausgefahrene Position zu verschieben, um die verformbare Zone (15) von ihrer ausgezogenen Ausführung in ihre eingezogene Ausführung übergehen zu lassen;
- wenn die gemessene Temperatur höher als der Schwellenwert ist, mindestens vorübergehend den Schieber (22) in seiner eingezogenen Position zu halten.

2. Verfahren nach Anspruch 1, **dadurch gekennzeichnet, dass** es, wenn die gemessene Temperatur höher als der Schwellenwert ist, einen Vorgang umfasst, der darin besteht, ein Warnsignal zu erzeugen.

3. Verfahren nach Anspruch 1 oder Anspruch 2, **dadurch gekennzeichnet, dass** es, wenn die gemessene Temperatur höher als der Schwellenwert ist, einen Vorgang umfasst, der darin besteht, den Schieber (22) in seiner eingezogenen Position während einer vorbestimmten Zeitverzögerung zu halten, dann einen Vorgang, der darin besteht, den Schieber (22) in seine ausgefahrene Position zu verschieben.

4. Verfahren nach einem der vorhergehenden Ansprüche, **dadurch gekennzeichnet, dass** es, wenn die gemessene Temperatur höher als der Schwellenwert ist, einen Zwangskühlungsvorgang des Behälters (1) umfasst.

5. Verfahren nach einem der Ansprüche 1 bis 3, **dadurch gekennzeichnet, dass** es, wenn die gemessene Temperatur höher als der Schwellenwert ist, einen Vorgang des Ablenkens des Behälters zu einem Pufferspeicher umfasst.

6. Verfahren nach einem der vorhergehenden Ansprüche, **dadurch gekennzeichnet, dass** es einen Vorgang des Vergleichens der gemessenen Temperatur mit einem Zielwert unter dem Schwellenwert umfasst.

7. Verfahren nach Anspruch 6, **dadurch gekennzeichnet, dass** es, wenn die gemessene Temperatur zwischen dem Schwellenwert und dem Zielwert liegt, einen Vorgang der Erhöhung der vom Schieber (22) an die verformbare Zone (15) angelegten Kraft und/oder einen Vorgang der Erhöhung der Verschiebegeschwindigkeit des Schiebers (22) umfasst.

8. Verfahren nach Anspruch 6, **dadurch gekennzeichnet, dass** es, wenn die gemessene Temperatur niedriger als der Zielwert ist, einen Vorgang der Verringerung der vom Schieber (22) an die verformbare Zone (15) angelegten Kraft und/oder einen Vorgang der Verringerung der Verschiebegeschwindigkeit des Schiebers (22) umfasst.

9. Verfahren nach einem der Ansprüche 6 bis 8, **dadurch gekennzeichnet, dass** die Zielwerttemperatur ungefähr 30 °C beträgt.

10. Verfahren nach einem der vorhergehenden Ansprüche, **dadurch gekennzeichnet, dass** der Schwellenwert ungefähr 40 °C beträgt.

11. Verfahren nach einem der vorhergehenden Ansprüche, **dadurch gekennzeichnet, dass** die verformbare Zone (15) eine Membran ist, die eine Fläche (10) des Bodens (6) und einen zentralen Stift (14) des Bodens (6) verbindet.

12. Verfahren nach einem der vorhergehenden Ansprüche, **dadurch gekennzeichnet, dass** die Temperatur mit Hilfe eines Sensors (40) gemessen wird, der von einer Wärmekamera oder einem Pyrometer gebildet ist.

13. Verfahren nach Anspruch 12, **dadurch gekennzeichnet, dass** die Temperatur am Körper (5) des Behälters (1) gemessen wird.

## Claims

1. Method for forming a package (2) from a container (1) having a body (5), a neck (8) and a bottom (6), the container (1) having a deformable zone (15) that can be deformed, using a mechanical push-rod (22) able to move between a retracted position and a deployed position, from a deployed configuration in which the said zone (15) projects towards the outside of the container (1), to a pushed-in configuration in which the said zone (15) projects towards the inside of the container (1), this method comprising the following operations:
- with the deformable zone (15) in its deployed position, filling the container (1) with a product at a temperature higher than the glass transition temperature of the material of the container (1);
- sealing the container (1) thus filled, using a cap (4) mounted on the neck (8);
this method being **characterized in that** it comprises the operations consisting in:
- measuring the temperature of the capped container (1) ;
- comparing the temperature thus measured against a predetermined threshold value;
- if the measured temperature is below or equal to the threshold value, moving the push-rod (22) from its retracted position towards its deployed position so as to cause the deformable zone (15) to pass from its deployed configuration to its pushed-in configuration;
- if the temperature measured is higher than the threshold value, keeping the push-rod (22) at least temporarily in its retracted position.

2. Method according to Claim 1, **characterized in that** it comprises, if the measured temperature is higher than the threshold value, an operation consisting in generating an alert signal.

3. Method according to Claim 1 or Claim 2, **characterized in that** it comprises, if the measured temperature is higher than the threshold value, an operation consisting in keeping the push-rod (22) in its retracted position for a predetermined timed period, followed by an operation consisting in moving the push-rod (22) towards its deployed position.

4. Method according to one of the preceding claims, **characterized in that** it comprises, if the measured temperature is above the threshold value, an operation of forced cooling of the container (1).

5. Method according to one of Claims 1 to 3, **characterized in that** it comprises, if the measured temperature is above the threshold value, an operation of diverting the container to a holding buffer.

6. Method according to one of the preceding claims, **characterized in that** it comprises an operation of comparing the measured temperature against a target value lower than the threshold value.

7. Method according to Claim 6, **characterized in that** it comprises, if the measured temperature is comprised between the threshold value and the target value, an operation of increasing the force applied by the push-rod (22) to the deformable zone (15) and/or an operation of increasing the speed of travel of the push-rod (22).

8. Method according to Claim 6, **characterized in that** it comprises, if the measured temperature is below the target value, an operation of reducing the force applied by the push-rod (22) to the deformable zone (15) and/or an operation of reducing the speed of travel of the push-rod (22).

9. Method according to one of Claims 6 to 8, **characterized in that** the target temperature value is around 30ºC.

10. Method according to one of the preceding claims, **characterized in that** the threshold value is around 40ºC.

11. Method according to one of the preceding claims, **characterized in that** the deformable zone (15) is a membrane connecting a seating surface (10) of the bottom (6) to a central pip (14) of the bottom (6).

12. Method according to one of the preceding claims, **characterized in that** the temperature is measured by means of a sensor (40) consisting of a thermal camera or a pyrometer.

13. Method according to Claim 12, **characterized in that** the temperature is measured on the body (5) of the container (1).
